(19) Europäisches Patentamt
European Patent Office
Office européen des brevets

(11) **EP 2 884 386 B1**

(12) **EUROPEAN PATENT SPECIFICATION**

(45) Date of publication and mention
of the grant of the patent:
**13.01.2016 Bulletin 2016/02**

(51) Int Cl.:
**G06F 7/58** (2006.01)

(21) Application number: **14191819.3**

(22) Date of filing: **05.11.2014**

(54) **Method of spectral tests of multiplicative congruential random number generators**

Verfahren für spektrale Tests von multiplikativen kongruenten zufälligen Nummernerzeugern

Procédé de tests spectraux de générateurs de nombres aléatoires congruentes multiplicatifs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2013 JP 2013273814**

(43) Date of publication of application:
**17.06.2015 Bulletin 2015/25**

(73) Proprietor: **Nakazawa, Hiroshi**
**Hirakata-shi Osaka 573-0081 (JP)**

(72) Inventors:
• **Nakazawa, Hiroshi**
**Hirakata-shi, Osaka, 573-0081 (JP)**
• **Nakazawa, Naoya**
**Hirakata-shi, Osaka, 573-0081 (JP)**

(74) Representative: **Wächter, Jochen et al**
**Kroher-Strobel**
**Rechts- und Patentanwälte PartmbB**
**Bavariaring 20**
**80336 München (DE)**

(56) References cited:
• **GEORGE S FISHMAN AND LOUIS R MOORE: "An Exhaustive Analysis of Multiplicative Congruential Random Number Generators with Modulus 2<{>31} - 1", SIAM JOURNAL ON SCIENTIFIC AND STATISTICAL COMPUTING, PHILADELPHIA, PA, US, vol. 7, no. 1, 1 January 1986 (1986-01-01) , pages 24-45, XP008171472, ISSN: 0196-5204, DOI: 10.1137/0907002**

• **GEORGE S FISHMAN: "MULTIPLICATIVE CONGRUENTIAL RANDOM NUMBER GENERATORS WITH MODULUS 2ß : AN EXHAUSTIVE ANALYSIS FOR ß = 32 AND A PARTIAL ANALYSIS FOR ß = 48", MATHEMATICS OF COMPUTATION, vol. 54, no. 189, 1 January 1990 (1990-01-01), pages 331-344, XP055136245,**

• **Naoya Nakazawa ET AL: "Multiplicative Congruential Generators with Moduluses Formed by Two Odd-Prime-Factors for Uniform and Independent Random Numbers II. Structures Associated with Spectral Tests", , 15 October 2012 (2012-10-15), pages 1-15, XP055136555, Retrieved from the Internet: URL:http://www10.plala.or.jp/h-nkzw/popesq 2.pdf [retrieved on 2014-08-26]**

• **SMITH C S: "Multiplicative pseudo-random number generators with prime modulus", JOURNAL OF THE ASSOCIATION FOR COMPUTING MACHINERY, ACM, NEW YORK, NY, US, vol. 18, no. 4, 1 October 1971 (1971-10-01), pages 586-593, XP009105894, ISSN: 0004-5411, DOI: 10.1145/321662.321673**

• **James E. Gentle: "Random Number Generation and Monte Carlo Methods - Second Edition - Chapter 2: Quality of Random Number Generators" In: "Random Number Generation and Monte Carlo Methods - Second Edition - Chapter 2: Quality of Random Number Generators", 1 January 2003 (2003-01-01), Springer, XP055162647, ISBN: 978-0-37-800178-6 pages 61-91, * page 65 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• Donald Knuth: "3.3.4. The Spectral Test" In: "The Art of Computer Programming, 2nd edition", 1 January 1981 (1981-01-01), Addison Wesley Publishing Company, Philippines, XP055136537, ISBN: 978-0-20-103822-4 pages 89-113, * page 89 - page 98 *

• Donald Knuth: "3.3.4. The Spectral Test" In: "The Art of Computer Programming, 2nd edition", 1 January 1981 (1981-01-01), Addison Wesley Publishing Company, Philippines, XP055136537, ISBN: 978-0-20-103822-4 pages 89-113, * page 89 - page 98 *

**Description**

**Background of the Invention**

**Field of the Invention**

This invention relates to new ways of spectral tests. The aim is to improve them innovatively in selecting and producing excellent multiplicative congruential generators for uniform and independent random numbers on computers. More specifically, the invention presents new spectral tests of the degree L for L≥3, and gives methods to have more reliable valuations, to salvage excellent generators so far ignored, and to provide sharper criteria in eliminating inadequate generators. We denote here (d,z,n) for the multiplicative congruential random number generator comprising a natural number d>0 for the modulus, an integer z coprime with d for the multiplier, and an integer n also coprime with d to define the initial random number. The generator (d,z,n), or (d,z) in brief, produces the sequence of integers $\{n_k = nz^{k-1} \bmod(d) \mid 0 < n_k < d, k=1,2,\cdots\}$ as the solution of the recursive equivalence relations

$$n_1 :\equiv n \bmod(d), \quad n_{k+1} :\equiv z n_k \bmod(d), \quad 0 < n_k < d, \quad k=1,2,\cdots.$$

On computers the output of the (d,z,n) generator is the real number $v_k := n_k/d$ with $0 < v_k < 1$ emitted consecutively for $k=1,2,\cdots$ as the sequence of uniform and independent random numbers.

**Description of the Related Art**

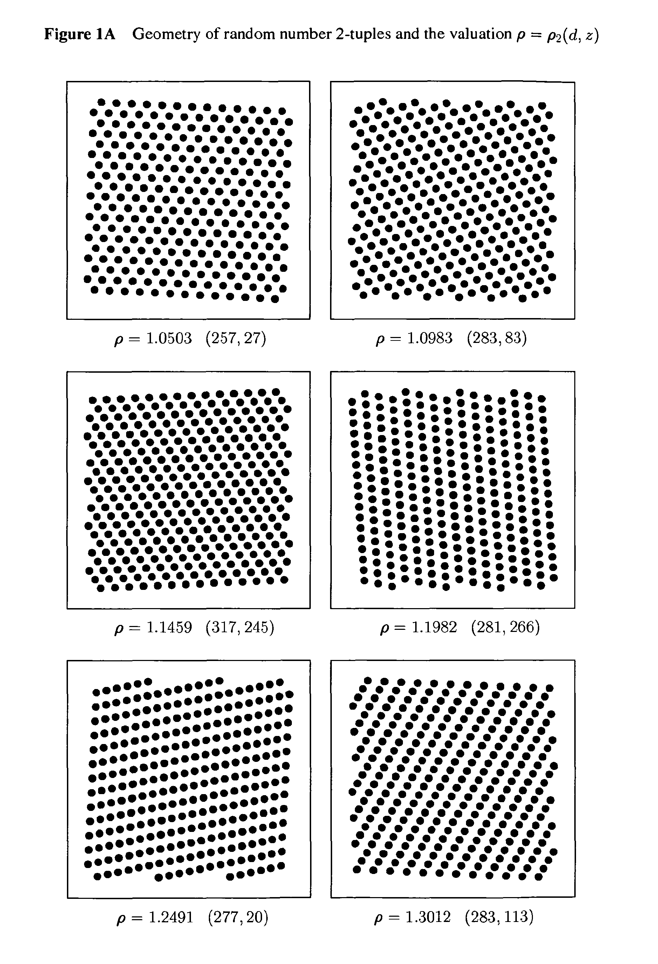

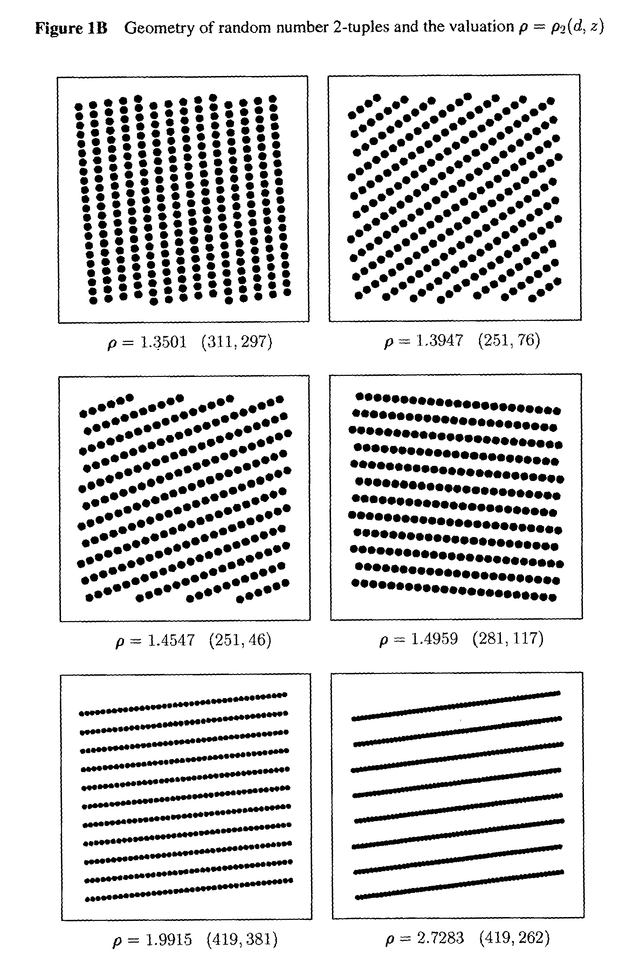

What we need first is the reflection on structures of existing spectral tests. The L-th degree spectral tests for the (d,z) generator aim to evaluate, in particular, the degree of independence of the emitted L consecutive random numbers. The method takes L-consecutive integer outputs $\{Q_k := (n_k, n_{k+1}, \cdots, n_{k+L-1}) \mid k=1,2,\cdots\}$ from the generator (d,z), and regards them as points in the L-dimensional Euclidean space $E_L$. The fundamental fact is that these points $\{Q_1, Q_2, \cdots\}$ are in a lattice $G_L(d,z)$ determined by d and z. Stated more clearly, the sequence of points of L-consecutive random numbers *take their seats* in lattice points of a lattice that is determined by d and z and to be denoted as $G_L(d,z)$. The method has little, not to say no, concern with said seat-taking processes by (d,z) outputs. It concentrates on the valuation of the *distribution of seats* prepared by the lattice $G_L(d,z)$ in $E_L$, whether the configuration is adequate as seats for uniform and independent random numbers. The meaning of this statement will become clear by visual examples of lattices $G_2(d,z)$ in the Euclidean plane $E_2$ given by the consecutive 2-tuples of (d,z) random numbers. See Figure 1 for plots of points $\{Q_k := (n_k, n_{k+1}) \mid k=1,2,\cdots\}$ for one period, emitted by (d,z) generator with odd prime d and its primitive root z. Values of (d,z) are chosen small, so as for plots to be decipherable to our eyes. Points are in the square $C_d$ issuing from the origin O with the length d for their edges; the outer frame drawn shows a square that is slightly larger. Plots at the start show neat arrays of emitted points close to the so-called triangular lattice formed by regular triangles. If consecutive 2-tuples of random numbers take seats in these neatly distributed positions in, hopefully, some randomly looking manner, we shall have little reasons to negate the statistical hypothesis that consecutive 2-tuples of random numbers appear uniformly with independence. On the contrary, we see at the end of Figure 1 such distributions of lattice points that appear to be packed on a few distinct lines with large, conspicuous separation between them. If points of 2-tuples appear on this type of seats, we shall find strong direction-dependence of their distribution that will suggest us that consecutive random numbers or their pairs appear correlated with dubious independence. Spectral tests give a number $\rho_2(d,z) > 1$ as the quantitative valuation of these impressions to the (d,z) generator; see Figure 1 with $\rho = \rho_2(d,z)$ noted for $G_2(d,z)$ lattices with the understanding that p closer to 1 *from above* is better.

**Brief Summary of Inventions**

We describe new ideas of the present invention. We go back to the mathematics of lattice structures arising in consecutive L-tuples of (d,z) random numbers, starting from the simplest L=2 case. A consecutive 2-tuple $Q_k$ may conveniently be regarded as a position row vector, $Q_k := (nz^{k-1}, nz^k) = nz^{k-1} e_1$, $e_1 := (1,z)$. Integer coordinates of $Q_k$ are taken *without* the equivalence modulo d. The position vector of any point in the Euclidean plane $E_2$ with its 2nd coordinate equivalent to that of $Q_k$ modulo d may be obtained by adding an integral multiple of the vector $e_2 := (0,d)$. Similarly, a point with its 1st coordinate equivalent modulo d to that of $Q_k$ is obtained by adding an integral multiple of the vector $e_1'$:

$$e_1' := (d,0) = d e_1 - z e_2.$$

Thus, points of 2-tuples generated by (d,z) together with their equivalents modulo d are contained in the set S of all integral linear combinations of vectors $\{e_1, e_2\}$, $S:=\{c_1e_1+c_2e_2|\ c_1, c_2 \text{ are integers}\}$. This S defines the lattice spanned by basis vectors $\{e_1, e_2\}$. Since S is determined by d and z, we denote the lattice as $S=G_2(d,z)$. Note first that $G_2(d,z)$ contains points with their coordinates that are not coprime with d. Therefore, 2-tuples emitted by the (d,z) generator take only a *portion* of lattice points of $G_2(d,z)$. Thus, all plots of Figure 1 for cases of odd prime moduluses and primitive roots, show unanimously the absence of the origin O among plotted points.

Two general features of $G_2(d,z)$ are to be noted. The one is that basis vectors $\{e_1, e_2\}$ span a parallelogram of area d by their determinant. This area is independent of the multiplier z. The other is that there are exactly d lattice points in the square $C_d$. with sides of length d. This is suggested by the fact that $C_d$ has $d^2$ for its area. We may more quantitatively argue that a lattice point $c_1e_1+c_2e_2=(c_1, zc_1+dc_2)$ has d possible values $\{0,1,\cdots,d-1\}$ for the first integer coordinate $c_1$ in $C_d$ while the second coordinate $zc_1+dc_2$ in $C_d$ fixes $c_2$ without choice. The parallelogram spanned by $\{e_1, e_2\}$ neatly fills $C_d$ regarded as a 2-dimensional torus with period d in both coordinates. Once $G_2(d,z)$ is known to be a lattice with these two features, the geometry of $E_2$ gives us significant structures without needing the information of z. We first note a general way to construct any set of basis vectors. Define a lattice line as a line including two distinct lattice points. In fact there exist infinitely many lattice points on a lattice line in $E_2$. Observe a pair of parallel and neighboring lattice lines, and another pair of parallel lattice lines which are not parallel to the preceding pair. Involved 4 lattice lines intersect at 4 lattice points; each lattice line has 2 adjacent lattice points of intersection. Choose a vertex of the parallelogram as $Q_0'$ and define vectors $\{e_1', e_2'\}$ by directed sides or edges of the parallelogram issuing from $Q_0'$. If we let the parallelogram slide in all possible ways along lattice lines taken here, $Q_0'$ itinerate all d lattice points, and the parallelogram fill the torus $C_d$ of area $d^2$ without overlap. Thus, vectors $\{e_1', e_2'\}$ form a set of basis vectors of the lattice $G_2(d,z)$. We call the noted parallelogram of area d as the unit cell after physicists. Two pairs of parallel neighboring lattice lines determine a set of basis vectors $\{e_1', e_2'\}$ of the lattice and the unit cell in this way. Conversely, any set $\{e_1'', e_2''\}$ of basis vectors of the lattice manifestly gives two pairs of parallel and neighboring lattice lines via a parallelogram, and the unit cell given by them share the same area d. The correspondence is one-to-one. Consider now the distance h between any pair of parallel and neighboring lattice lines. By the noted correspondence we conclude that h is a height of a vertex of a unit cell parallelogram to a base line facing it. Conversely, any height of any vertex of a unit cell parallelogram to its facing base line is certainly the distance between a pair of parallel and neighboring lattice lines. These matters are unified more conveniently in terms of the triangle spanned by basis vectors $\{e_1', e_2'\}$ with the area d/2: The distance h between any set of parallel and neighboring lattice lines is a height of a vertex of a triangle spanned by a set of basis vectors with the area d/2, and vice versa.

We rephrase the overview for the amenability in higher dimensions. Suppose we are given a lattice. The *operational definition* of a set of lattice basis vectors is as follows. (1) Take a lattice line, (2) choose a lattice point $Q_0'$ on it, (3) define a vector $e_1'$ issuing from $Q_0'$ and directed to L-1=1 of its neighboring lattice point on the lattice line, (4) take a parallel and neighboring lattice line to the first, (5) take any lattice point on it, (6) and finally define the vector $e_2'$ from $Q_0'$ to this point. The set $\{e_1', e_2'\}$ is a set of linearly independent basis vectors of the lattice by the preceding arguments. Obviously, any set of basis vectors may be constructed in this way. Call the triangle formed by any 2 basis vector $\{e_1', e_2'\}$ as a 2-simplex, after the terminology of geometers. If the lattice is $G_2(d,z)$, then any 2-simplex formed by basis vectors has a constant area d/2. And the distance between any parallel neighboring lattice lines is the height of some vertex of a 2-simplex formed by some set of basis vectors. Conversely, any vertex of any 2-simplex formed by any set of basis vectors is the distance between some parallel lattice lines.

With the clear perspective obtained we again look at plots listed in Figure 1. They show that 2-simplexes in these plots take diverse forms according to choices of (d,z) and to choices of basis vectors. Early plots in Figure 1 show lattices that may readily be conceived as constructed with nearly regular triangles. Since points are in fact discrete, observations need to be conducted with some smearing by small areas or by belts with small widths. On this premise these early entries of lattices in Figure 1 seem to provide 2-tuples of (d,z) random numbers with seats that are nearly equidistantly located in the plane. These lattices will give little room for objections against the statistical hypothesis that random numbers are emitted uniformly and independently. In plots appearing near the end of Figure 1 on the contrary, we see sparse distributions of a few densely crowded lattice lines, which are located parallel with conspicuously large distances. It will be difficult to insist that plots show the appearance of consecutive random numbers with statistical independence. If we are to choose a random number generator on our computers, we shall hesitate to adopt (d,z) showing this type of plots with its emitted 2-tuples.

To the feeling of ours noted, the 2nd degree spectral tests give quantitative valuations using the *largest* distance $\lambda_2(d,z)$ of the parallel neighboring lattice lines in $G_2(d,z)$.

(Corollary 1) Among all triangles with a constant area, the regular triangle realizes the smallest value for its largest height of vertices to the base lines facing them. In the setting that the constant area is d/2, the regular triangle or the regular 2-simplex realizes this smallest value of the largest height as $A_2(d)= 2^{-1/2}3^{1/4}d^{1/2}\approx 0.93060d^{1/2}$.

(Proof) We use the reduction to absurdity, expecting applications to higher dimensions. Assume that the smallest of the largest height is realized by a triangle that is *not* regular. Then the dichotomy is the existence of two shortest edges or one. If two shortest edges exist, we take one of them as the base, and let the vertex facing it move parallel to the base without changing the area of the triangle and the height of the vertex. There is a direction to which the other shortest edge is elongated, so that a small movement of the vertex realizes a triangle of the same area with only one shortest edge to which the height of the facing vertex retains the smallest value of the largest height among all possible shapes. We therefore need to consider only the case k=1. Then we may take a different edge as the base, and let the vertex facing it be moved parallel to the new base. Then the shortest edge may be elongated slightly but without losing the shortest position, thanks to the continuity of real numbers. This implies that the shortest value of the largest height may be diminished, contradicting the assumption that the original length is the smallest of realizable values among any shape of the triangle. The absurdity proves that the shape of the triangle must be regular. Drawing the regular triangle of the area d/2, we readily obtain noted shortest value $\Lambda_2(d)$.

The lattice in $E_2$ with basis vectors $\{e_1,e_2\}$ forming a regular triangle, or a regular 2-simplex, is called a triangular lattice as said. The regular 2-smplex is formed by 2 linearly independent vectors, and is characterized by the fact that all 3 vertices, say origin and two points with noted two position vectors, give 3 pairs that are all at an equal distance. This is in a sense the ideal geometrical configuration of lattice points in which consecutive 2-tuples of points formed by uniform and independent random numbers take their seats. Let again $\lambda_2(d,z)$ be the largest distance of parallel neighboring lattice lines in the lattice $G_2(d,z)$. Corollary 1 proves the inequality $\lambda_2(d,z)>\Lambda_2(d)$; equality never holds, because basis vectors $\{e_1,e_2\}$ of the lattice $G_2(d,z)$ have necessarily integer coordinates and can never realize the *global* minima provided by regular triangles needing irrational coordinates. The closeness of the ratio

$$\rho_2(d,z):=\lambda_2(d,z)/\Lambda_2(d)>1$$

to 1 gives a good measure how close is the lattice $G_2(d,z)$ to the ideal triangular lattice, and to what degree (d,z) generator emits consecutive 2-tuples with the least reasons to deny the statistical hypothesis of uniformity and independence. The fundamental idea of the 2nd degree spectral tests is to utilize this fact. We compute $\rho_2(d,z)>1$ for every candidate multiplier z under the modulus d, and selects z that realizes $1<\rho_2(d,z)<R_2$ for a pre-assigned criterion $R_2>1$. Pioneers Fishman and Moore (1986) chose $R_2=1.25$, and this criterion has been proved versatile and useful in all later applications. Figure 1 shows $\rho=\rho_2(d,z)$ for each depicted generator (d,z). A glance of plots will readily convince us that the criterion p<1.25 is highly reasonable. Sorry to say, the circumstance is not so transparent with consecutive L-tuples of random numbers for $L\geq 3$.

Fishman and Moore (1986)/ G. S. Fishman and L. R. Moore: An exhaustive analysis of multiplicative congruential random number generator with modulus 231-1, SIAM Journal on Scientific and Statistical Computing Vol. 7 (1986), pp. 24-45.

We take $L\geq 2$, and consider generally consecutive L-tuples of random numbers emitted from the (d,z,n) generator. We again denote $C_d$ for the hypercube issuing from the origin O of the L-dimensional Euclidean space $E_L$ with edges of length d. Points

$$\{Q_k:=(nz^{k-1},nz^k,\cdots,nz^{k+L-2})=nz^{k-1}(1,z,z^2,\cdots,z^{L-1})|k-1,2,\cdots\}$$

in $E_L$ represent the consecutive L-tuples emitted from the (d,z,n) generator, and all of their equivalents modulo d are readily seen to be expressed by suitable integral linear combinations of the following vectors,

$$e_1:=(1,z,z^2,\cdots,z^{L-1}),$$
$$e_2:=(0,d,0,\cdots,0),$$
$$e_3:=(0,0,d,\cdots,0),$$
$$\cdots\cdots\cdots\cdots$$
$$e_L:=(0,0,0,\cdots,d).$$

These vectors are linearly independent and span the parallelepiped of volume $d^{L-1}$ by their determinant. Let $G_L(d,z)$ denote the lattice in $E_L$ spanned by these L basis vectors. The volume $d^L$ of the hypercube $C_d$ at once suggests that this lattice will have d lattice points in $C_d$. The fact may be ascertained as follows. The vector $c_1e_1+c_2e_2+\cdots+c_Le_L$ with integer coefficients $c_1,c_2,\cdots,c_L$ has the first coordinate $c_1$, which can have d different values $\{0,1,\cdots,d-1\}$ in $C_d$. Once $c_1$ is fixed as one of these, the 2nd coordinate $c_1z+c_2d$ chooses a unique integer $c_2$ in $C_d$; the matter is the same with $c_3,\cdots,c_L$. Hence there are d lattice points of $G_L(d,z)$ in $C_d$.

Just as the triangle or the 2-simplex formed by linearly independent 2 basis vetors in L=2 dimension, the above noted linearly independent L basis vectors $\{e_1,e_2,\cdots,e_L\}$ of $G_L(d,z)$ form an L-dimensional simplex, or L-simplex. In analogy to 2-dimensional case, think about a general set $\{e_1',e_2',\cdots,e_L'\}$ of basis vectors for this $G_L(d,z)$ given, and call the parallelepiped formed by them the unit cell. The lattice line corresponds to the lattice hyperplane of L-1 dimension that contains L-1 lattice points $\{P_1,P_2,\cdots,P_{L-1}\}$ whose position vectors, say from a lattice point Po, are linearly independent. We may say after geometers that this lattice hyperplane is determined by the inclusion of L affinely independent points

$\{P_0,P_1,P_2,\cdots,P_{L-1}\}$. An operational definition of a general set of basis vectors $\{e_1',e_2',\cdots,e_L'\}$ is stated readily. We take (1) a pair of parallel and neighboring lattice hyperplanes, take (2) any set of affinely independent lattice points $\{P_0',P_1',\cdots,P_{L-1}'\}$ on one of the lattice hyperplane with the restriction that $\{P_1',\cdots,P_{L-1}'\}$ are the nearest lattice points from Po' on the line connecting them, take (3) any lattice point $P_L'$ on the other parallel lattice hyperplane and define (4) vectors $\{e_1',e_2',\cdots,e_L'\}$ as position vectors of $\{P_1',P_2',\cdots,P_L'\}$ from the reference point Po'. In translations along each of these vectors, the parallelepiped or the unit cell formed by $\{e_1',e_2',\cdots,e_L'\}$ fills the hypercube $C_d$ of hypervolume $d^L$ which is taken as a torus with the period d in coordinates, and the reference lattice point Po' itinerates all of d lattice points in $C_d$. The unit cell has the hypervolume $d^{L-1}$ which is the determinant of vectors $\{e_1',e_2',\cdots,e_L'\}$. These are basis vectors of the lattice $G_L(d,z)$. They form an L-simplex with L vertices $\{P_0',P_1',\cdots,P_{L-1}'\}$. In this simplex each vertex faces an L-1 dimensional lattice hyperplane that is determined by the inclusion of other L-1 vertices. Any L-simplex formed by L linearly independent vectors $\{e_1',e_2',\cdots,e_L'\}$ with the determinantal volume $d^{L-1}$ is well-known to have $V=d^{L-1}/L!$ for its hypervolume; this is because V is linear in respective vectors, since the position vector $e_j'+e_j''$ of a vertex gives a height that is the sum of heights of respective vectors from the hyperplane facing the vertex; and L-simplexes formed by unit vectors along coordinate axes have 1/L! as its hypervolume. Thus, in the L-simplex formed by $\{e_1',e_2',\cdots,e_L'\}$ the length h of the perpendicular line from a vertex to the facing hyperplane with the hyperarea S gives the hypervolume $hS/L=d^{L-1}/L!$ as a cone. What matters here is the fact that the hypervolume of the L-simplex is the same for any choice of basis vectors, and in any such L-simplex its arbitrary vertex with the height h to the facing hyperplane of area S gives the constant product hS. Therefore, the largest distance between neighboring parallel lattice hyperplanes of dimension L-1 is given by the height of the vertex from the facing lattice hyperplane with the smallest hyperarea in *some* L-simplex. The setting is all the same in this L-dimension as in the dimension L=2. However, the kernel of the matter attains a different feature summarized below.

(Corollary 2) Let $L\geq3$ be a given dimension, and consider L-simplexes which are issuing from the origin O of $E_L$ and defined by O and L points with L linearly independent position vectors from O. Define the regular simplex in $E_L$ by the restriction that its (L+1)L/2 pairs of vertices have one and the same length. Under the restriction that L-simplexes have the same hypervolume *in the vicinity of a regular form*, the regular L-simplex gives the *local* minimum of the largest height of the vertex to the base hyperlane facing it.

(Proof) Again we use the reduction to absurdity. Consider a neighborhood of the configuration of L-simplexes of a constant hypervolume around a regular form, viz. all (L+1)L/2 edges have their lengths in a small vicinity of the all-equal case. Note that heights of any vertex from the facing base hyperplane vary continuously together with areas of base hyperplanes. Assume that an L-simplex does not have the regular form, but its k vertices face base hyperplanes with the smallest hyperarea and have the same height h which is the smallest among all possible L-simplex configurations in this local range close to the regular form. If the base hyperplane with the smallest area is unique with k=1, then a slight deformation of the L-simplex (e.g. by letting a vertex facing other base hyperplane move slightly to a direction parallel to its base hyperpane) will keep the smallest-area base hyperplane to the smallest position but with a slightly increased area and a slightly diminished height h of the facing vertex. This contradicts the assumption that h is locally the smallest among all possible forms of the L-simplex with a single smallest area base hypeplane. Therefore, the case k=1 does not arise. The remaining possibility is that k base hyperplanes with $2\leq k\leq L-1$ are the smallest. But then we may take one of them as the base hyperplane and let the opposing vertex move in parallel to the base hyperplane. Then, the area of this particular hyperplane and the height h of the opposing vertex remain the same, but some other base hyperplane (which is necessarily *not* parallel to the fixed base hyperplane) may be enlarged in its area by a suitable choice of the movement of the vertex. This diminishes the number k of the smallest area base hyperplanes. The procedure may be repeated to reduce k to k=1, which has been proven contradictory. Thus the starting hypothesis is false, and the assertion holds true. ■

Let points $\{P_1,P_2,\cdots,P_L\}$ in the Euclidean space $E_L$ have linearly independent position vectors from a reference point Po, or $\{P_0,P_1,P_2,\cdots,P_L\}$ be affinely independent. A regular L-simplex with vertices $\{P_0,P_1,P_2,\cdots,P_L\}$ is defined by the condition that any pairs of points among them, which exist (L+1)L/2 in their total number, give one and the same Euclidean distance. In our present problem L linearly independent lattice basis vectors $\{e_1,e_2,\cdots,e_L\}$ may be used to define a regular L-simplex by the noted definition, say with the origin O for Po. Regarded from the standpoint of spectral tests, the regular L-simplex is manifestly the ideal configuration as building blocks of the lattice $G_L(d,z)$. Forgetting that the lattice is composed by L-tuples of outputs from the (d,z) generator, we start by assuming that a regular L-simplex is spanned by the following form of basis vectors:

$$e_1':=(b,a,a,\cdots,a,a),$$
$$e_2':=(a,b,a,\cdots,a,a),$$
$$e_3':=(a,a,b,\cdots,a,a),$$
$$\cdots\cdots\cdots\cdots$$
$$e_{L-1}':=(a,a,a,\cdots,b,a),$$

(continued)

$$e_L':=(a,a,a,\cdots,a,b).$$

Constants a and b are to be determined by the following two restrictions:

(1) These vectors span by their determinant the volume $d^{L-1}$.
(2) They form a regular L-simplex.

By assumed forms, vectors have one and the same $\|e_j'\|^2=(L-1)a^2+b^2$ as Euclidean length for any j. Also, the inner product for i≠j, $(e_i',e_j')=(L-2)a^2+2ab$, does not depend on i and j, so that any pair of vectors form an equal angle between them. The unit vector

$e_0':=(1,1,1,\cdots,1,1)/L^{1/2}$

gives the inner product $(eo', e_j')=\{(L-1)a+b\}/L^{1/2}=:h$ for any $1\leq j\leq L$; this h is the distance or height of the origin O to the centroid of the base hyperplane that contains points with position vectors $\{e_1',e_2',\cdots,e_L'\}$. Therefore, the height $M_L(d)$ of any vertex to its facing base hyperplane in the regular L-simplex formed by these basis vectors with the determinant giving the volume $d^{L-1}$ to the unit cell, is given by

$$M_L(d) = h = \{(L-1)a+b\}/L^{1/2} = s/L^{1/2}, \qquad s :=(L-1)a+b,$$

which will be obtained after a and b are determined by (1) and (2). We first compute the determinant volume,

$$
\begin{vmatrix} b & a & a & \cdots & a & a \\ a & b & a & \cdots & a & a \\ a & a & b & \cdots & a & a \\ & & \cdots\cdots\cdots\cdots & & \\ a & a & a & \cdots & a & b \end{vmatrix}
=
\begin{vmatrix} s & s & s & \cdots & s & s \\ a & b & a & \cdots & a & a \\ a & a & b & \cdots & a & a \\ & & \cdots\cdots\cdots\cdots & & \\ a & a & a & \cdots & a & b \end{vmatrix}
= d^{L-1}.
$$

Subtracting the 1st column from all of other columns, we obtain $d^{L-1}=s(b-a)^{L-1}$. Next we consider the restriction (2). Using $\|e_i'\|^2=\|e_j'-e_k'\|^2$ for $1\leq i,j,k\leq L$ with j≠k, we obtain
$(L-1)a^2+b^2=2(b-a)^2$.

Putting b=ξa, we have that ξ satisfies $\xi^2+(L-1)=2(\xi-1)^2$, or $\xi=2\pm(L+1)^{1/2}$. Some algebras on any of these solutions give the same result for the regular L-simplex in any dimension L≥2,
$M_L(d)=L^{-1/2}(L+1)^{(L-1)/(2L)}d^{(L-1)/L}$.

This solves the problem. The explicit forms of $M_L(d)$ are as follows for 2≤L≤6:

$M_2(d):=2^{-1/2}3^{1/4}d^{1/2} \approx 0.93060d^{1/2}$,
$M_3(d):= 3^{-1/2}2^{2/3}d^{2/3} \approx 0.91649d^{2/3}$,
$M_4(d):= 2^{-1}5^{3/8}d^{3/4} \approx 0.91429d^{3/4}$,
$M_5(d):=5^{-1/2}2^{2/5}d^{4/5}/ \approx 0.91575d^{4/5}$,
$M_6(d):=6^{-1/2}7^{5/12}d^{5/6} \approx 0.91844d^{5/6}$.

Fishman and Moore (1986) quoted the geometry of numbers for the minimum $\Lambda_L(d)$ of the largest distance $\lambda_L(d,z)$ of parallel and neighboring lattice hyperplanes in the L-dimensional lattice $G_L(d,z)$, and conducted their epoch making exhaustive spectral tests on primitive roots of the prime modulus $d=2^{31}-1$. Values of $\{\Lambda_L(d)| 2\leq L\leq6\}$ in their Eq. (15) are as follows:

$\Lambda_2(d)=M_2(d)=2^{-1/2}3^{1/4}d^{1/2}\approx0.93060d^{1/2}$,
$\Lambda_3(d)=2^{-1/6}d^{2/3} \approx 0.80909d^{2/3}$,
$\Lambda_4(d)= 2^{-1/4}d^{3/4} \approx 0.84090d^{3/4}$,
$\Lambda_5(d)=2^{-3/10}d^{4/5} \approx 0.81225d^{4/5}$,
$\Lambda_6(d) =2^{-1/2}3^{1/12}d^{5/6}\approx0.77490d^{5/6}$.

These are smaller than $M_L(d)$ for L≥3. In short, Fishman and Moore performed spectral tests taking the *global* minima of largest distances for neighboring parallel lattice hyperplanes as the values to be realized by (d,z) generators. The present inventors rather think that the form of regular L simplex is the ideal to be realized by the lattice $G_L(d,z)$, and spectral tests should prefer the local minima $\{M_L(d)| 2 \le L \le 6\}$ as reference values. This necessitates the introduction of a new set of valuations different from $\{\rho_L(d,z)| L \ge 3\}$ of Fishman and Moore (1986),

$$\rho_L'(d,z):= \lambda_L(d,z)/M_L(d) < \rho_L(d,z) = \lambda_L(d,z)/\Lambda_L(d), \quad L \ge 3,$$

as adequate indicators of the performance of (d,z) generator. Since $M_L(d)$ is not the global minimum, some lattices may give values $\rho_L'(d,z) \le 1$. If $\rho_L'(d,z) \le 1$ occurs, it implies that the lattice $G_L(d,z)$ has a configuration that is out of the so-called local basin of the minimum, or is not in the vicinity of the regular L-simplex in its geometrical configuration. It will thus be adequate to judge (d,z) to be passable only if $1 < \rho_L'(d,z) < R_L$ is the case for a pre-assigned $R_L$, and to reject those (d,z) with $\rho_L'(d,z) \le 1$, even if $\rho_L'(d,z)$ is close to 1 from below.

## Detailed Description of Inventions

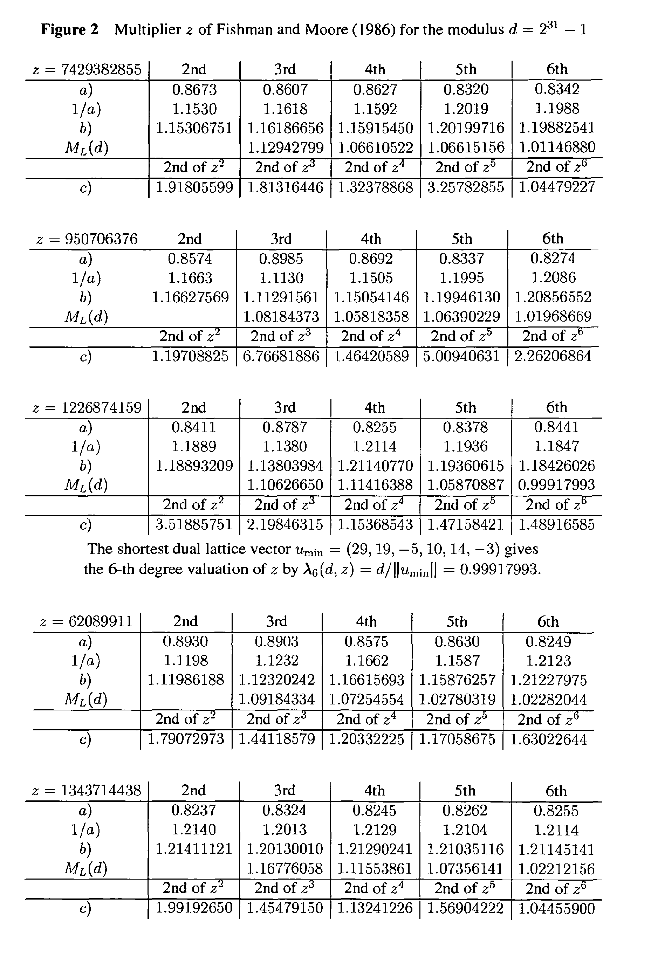

We have discussed that $\{M_L(d)| 2 \le L \le 6\}$ are the standard reference values to be used in higher degree spectral tests. The technological task is to specify procedures needed to realize the tests explicitly. Examples will show the points clearly. Fishman and Moore (1986) gave 5 excellent primitive root multipliers in their Table 2 for the prime modulus $d=2^{31}-1$. We quote them in List 2A to List 2E in the present Figure 2. A similar figure was given in our preceding patent applications, I27665HIR, OUS27668HIR, OEP27669HIR and ORU27670HIR, noting 2nd degree tests of $(d,z^2)$, $(d,z^3)$, $\cdots$, $(d,z^6)$. The row labeled a) reproduces the row $S_1$ in Fishman and Moore. The row labeled 1/a) is the inverse of numbers in the row a), and corresponds to the present $\rho_L(d,z):= \lambda_L(d,z)/ \Lambda_L(d)$. The same quantities are re-calculated by inventors in the row b). Numbers in the row labeled $M_L(d)$ show $\rho_L'(d,z):=\lambda_L(d,z)/M_L(d)$ for $L \ge 3$. These may also be confirmed by conversion from the row c). A special mention will be necessary on List 2C for the primitive root multiplier $z=1226874159$. As reported already, the valuation of $(d,z^2)$ in the row c) is bad; this multiplier is inadequate. The row of $M_L(d)$ further contains $\rho_6'(d,z)=0.99917993<1$, implying that the lattice $G_6(d,z)$ is out of the local basin around the regular 6-simplex. Though the number itself is very close to 1 from below, this primitive root multiplier should be discarded as unqualified also in this 6-th degree test, reinforcing the conclusion of the 2nd degree spectral test of $(d,z^2)$.

We thus conclude that the new spectral tests based on $\{M_L(d)| L \ge 3\}$ should be used as a sharper method to pick out excellent (d,z) generators correctly. They are also needed to salvage excellent multipliers, which have been discarded in reference to $\{\Lambda_L(d)| L \ge 3\}$ as not passable, but might have in fact been passable in their reference to larger $\{M_L(d)| L \ge 3\}$. There exist, however, due cares with which new tests based on $\{M_L(d)| L \ge 3\}$ should be conducted. In order to clarify the point, we go back to the method of computing the largest distance $\lambda_L(d,z)$ between parallel neighboring lattice hyperplanes from d and z. The method relies on the use of vectors in a lattice $G_L^*(d,z)$ dual to $G_L(d,z)$. This dual lattice $G_L^*(d,z)$ is defined by the set $\{f_1, f_2, \cdots, f_L\}$ of basis vectors ,

$$f_1:=(d,0,0, \cdots,0),$$
$$f_2:=(-z,1,0,\cdots,0),$$
$$f_3:=(-z^2,0,1,\cdots,0),$$
$$\cdots\cdots\cdots\cdots$$
$$f_L:=(-z^{L-1},0,0,\cdots,1).$$

These are manifestly linearly independent, and have inner products

$$(e_j,f_k)= d\delta_{jk}, \quad 1 \le j,k \le L.$$

Let matrices E, F be defined by vectors $\{e_1,e_2,\cdots,e_L\}$ and $\{f_1,f_2,\cdots,f_L\}$ as row vectors, respectively. The noted inner products are the relation of the matrix product, $E^tF=dI$, with $^tF$ for the transposed matrix of F and I for the $L \times L$ unit matrix. Thus $^tF$ is determined as $^tF=dE^{-1}$ uniquely. There holds the following.

(Corollary 3) Dual lattice basis vectors $\{f_1,f_2,\cdots,f_L\}$ have integer coordinates, and the shortest non-zero vector has the Euclidean length not less than 1. Let $u_{min}$ be the shortest non-zero vector of the dual lattice. There holds the following for the largest distance $\lambda_L(d,z)$ between L-1 dimensional parallel and neighboring lattice hyperplanes of the lattice $G_L(d,z)$:

$$\lambda_L(d,z)=d/\| u_{min} \|,$$

with the Euclideam length $\|u_{min}\|$ of $u_{min}$. (End of Corollary 3)
The proof of this statement is plain but takes some length. Please consult Nakazawa and Nakazawa (2012) for the unabridged proof. This corollary enables us to convert works of L-th degree spectral tests to the search of shortest vectors in $G_L^*(d,z)$. The search is performed most conveniently in terms of Cartesian coordinates.

(Corollary 4) Let u be a vector with Cartesian integer coordinates $(u_1, u_2, \cdots, u_L)$. A necessary and sufficient condition for u to be in the dual lattice $G_L^*(d,z)$ is the following:

$$u_1 + zu_2 + z^2 u_3 + \cdots + z^{L-1} u_L \equiv 0 \bmod(d).$$

(Proof) If the vector u is in $G_L^*(d,z)$, then it is a linear combination of basis vectors $\{f_1, f_2, \cdots f_L\}$ with integer coefficients $c_1, c_2, \cdots, c_L$, and has Cartesian coordinates

$u = (u_1, u_2, \cdots, u_L) = c_1 f_1 + c_2 f_2 + \cdots + c_L f_L = (c_1 d - c_2 z - c_3 \ z^2 - \cdots - \ c_L \ Z^{L-1}, \ c_2, \ c_3, \ \cdots, \ c_L)$. This proves $u_1 + zu_2 + z^2 u_3 + \cdots + z^{L-1} u_L = c_1 d \equiv 0 \bmod(d)$. The relation is thus necessary. Conversely, if $u_1 + zu_2 + z^2 u_3 + \cdots + z^{L-1} u_L \equiv 0 \bmod(d)$ is true, there is an integer c that gives $u_1 + zu_2 + z^2 u_3 + \cdots z^{L-1} u_L = cd$. We have $u_1 = cd - u_2 z - u_3 \ z^2 - \cdots - \ u_L^{L-1}$ and $u = (u_1, u_2, \cdots, u_L) = cf_1 + u_2 f_2 + u_3 f_3 + \cdots + u_L f_L$.

Therefore, the vector u is in $G_L^*(d,z)$, and the condition is sufficient. ∎

It is significant to grasp that global minima $\{\Lambda_L(d) | L \geq 2\}$ used in Fishman and Moore (1986) retain their significant roles in the search of the shortest vector $u_{min}$ of $G_L^*(d,z)$, because they stipulate $\lambda_L(d,z) = d/\|u_{min}\| > \Lambda_L(d)$, or $\|u_{min}\| < d/\Lambda_L(d)$ to hold. Thus, we may summarize procedures of the L-th degree spectral test as follows.

(Corollary 5) Let $L \geq 2$ be given. The valuation $\rho_L'(d,z) := \lambda_L(d,z)/M_L(d)$ of the L-th degree spectral test of a (d,z) generator is obtained by the following steps.

> (1) Obtain the vector $u_{min}$ of the dual lattice $G_L^*(d,z)$ by sweeping over *every* vector u with Cartesian coordinates $u = (u_1, u_2, \cdots, u_L)$ satisfying
> $\|u\|^2 = (u_1)^2 + (u_2)^2 2 + \cdots + (u_L)^2 < d^2/\{\Lambda_L(d)\}^2$, $u_1 + zu_2 + z^2 u_3 + \cdots +_z^{L-1} u_L \equiv 0 \bmod(d)$, and finding the one with the smallest $\|u\|$.
> (2) Compute $\lambda_L(d,z) = d/\|u_{min}\|$.
> (3) Compute the valuation $\rho_L'(d,z) := \lambda_L(d,z)/M_L(d)$.
> (4) If $1 < \rho_L'(d,z) < R_L$ holds true with a pre-assigned level $R_L > 1$, then adopt (d,z) as passable.

Nakazawa and Nakazawa (2012)/ N. Nakazawa and H. Nakazawa: Multiplicative congruential generators with moduluses formed by two odd-prime factors for uniform and independent random numbers II. Structures of spectral tests, uploaded (October, 13, 2012) in the URL http://www10.plala.or.jp/h-nkzw/.

After the preceding patent application of the present inventors, the greatest urgency in spectral tests exists in the incorporation of 2nd tests of $(d, z^2)$, $(d, z^3)$, $\cdots$. The meaning of ideal values $\{M_L(d) = L^{-1/2}(L+1)^{(L-1)/(2L)} d^{(L-1)/L} | L \geq 3\}$, as heights of vertices of regular L-simplexes to facing L-1 dimensional lattice hyperplanes, then entitles these new ideal values with outstanding positions to be chosen as reference levels in higher degree spectral tests, together with the level $M_2(d) = A_2(d)$ so far used. Inventors feel that $\{R_L = 1.25 | 2 \leq L \leq 6\}$ might be a judicious choice in deciding the multiplier z to be passable, but this may depend on the number of passers. Can spectral tests be improved further? The question still remains open to be investigated. However, one certain moral of all these story is that we can never rely on our intuition or guesses in random number problems. Everything should be tested before use. We think that we are on the right track at present, but this might require some further tests for reinforcement of for confirmation. Contributions from people all around the world are wished for.

**Brief Explanations of Figures**

> (Figures 1A and 1B) Typical plots of points formed by consecutive 2-tuples of random numbers emitted from the multiplicative congruential generator (d,z); depicted distributions correspond to the valuation $\rho := \rho_2(d,z)$ around 1.05, 1.10, $\cdots$; squares drawn are taken slightly larger than the square $C_d$, and (d,z) may be read from figure captions.
> (Figure 2) Performances of top 5 multipliers of Fishman and Moore (1986) shown in their p.37 as Table 2; the row a) is for the values shown in their paper as $S_1$, the row 1/a) shows the inverse of values of a) and agrees with the present $\rho_L(d,z)$, the row b) is the calculation of $\rho_L(d,z)$ by the present inventors, the row titled $M_L(d)$ shows the valuation $\rho_L'(d,z)$ based on regular L-simplex values, and the remaining row c) shows $\rho_2(d,z^j)$ for $j = 2, 3, \cdots, 6$.

**Claims**

1. A method of spectral tests, on multiplicative congruential generator (d,z,n) or (d,z) comprising an odd integer d for the modulus and an integer z coprime with d for the multiplier and an integer n coprime with d for the seed and generating the sequence of integers $\{n_k:\equiv nz^{k-1} \bmod(d)| 1\leq n_k\leq d, k=1,2,\cdots\}$ consecutively and giving the output random number sequence by realizing the arithmetic $\{v_k:=n_k/d| 0\leq v_k\leq 1, k=1,2, \cdots\}$, the method being based on the valuation of the geometrical form of the lattice $G_L(d,z)$, wherein L consecutive integer outputs of the generator (d,z,n) $\{Q_k:=(n_k,n_{k+1},\cdots,n_{k+L-1})|k=1,2, \cdots\}$ take their seats, through the computation of the largest distance $\lambda_L(d,z)$ between parallel and neighboring lattice hyperplanes of $G_L(d,z)$, **characterised by** evaluating $\rho_L'(d,z):=\lambda_L(d,z)/M_L(d)$ of the generator (d,z) on the basis of new reference values

$$M_L(d):=L^{-1/2}(L+1)^{(L-1)/(2L)}d^{(L-1)/L}, \qquad L\geq 3,$$

and judging (d,z) to be passable if conditions

$$1<\rho_L'(d,z)<R_L, \qquad 3\leq L\leq 6,$$

are fulfilled for prescribed levels $\{R_L>1| 3\leq L\leq 6\}$.

**Patentansprüche**

1. Verfahren für spektrale Tests an einem multiplikativen kongruenten Generator (d, z, n) oder (d, z), der eine ungerade ganze Zahl d für den Betrag und eine ganze Zahl z, die zu d teilerfremd ist, für den Multiplikator und eine ganze Zahl n, die zu d teilerfremd ist, für den Samen aufweist und nacheinander die Folge von ganzen Zahlen $\{n_k:\equiv nz^{k-1} \bmod(d) | 1\leq n_k\leq d, k=1,2 \cdots\}$ generiert und die Ausgabe-Zufallszahlenfolge durch das Ausführen der Rechnung $\{v_k:=n_k/d| 0\leq v_k\leq 1, k=1,2, \cdots\}$ ermittelt, wobei das Verfahren auf der Bestimmung der geometrischen Form des Verbands $G_L(d, z)$ basiert, wobei L aufeinanderfolgende ganzzahlige Ausgaben des Generators (d, z, n) $\{Q_k:=(n_k,n_{k+1}\cdots,n_{k+L-1}) | k=1,2, \cdots\}$ ihre Plätze einnehmen, durch die Berechnung des größten Abstands $\lambda_L(d,z)$ zwischen parallelen und benachbarten ermittelten Hyperebenen von $G_L(d, z)$, **gekennzeichnet durch** das Ermitteln von $\rho_L'(d,z):= \lambda_L(d,z)/M_L(d)$ des Generators (d, z) auf der Basis eines neuen Referenzwertes

$$M_L(d):=L^{-1/2}(L+1)^{(L-1)/(2L)}d^{(L-1)/L}, \quad L\geq 3,$$

und das Beurteilen, ob (d, z) annehmbar ist, wenn die Bedingungen

$$1< \rho_L'(d,z)<R_L, 3\leq L\leq 6,$$

für vorgegebene Stufen $\{R_L>1|3\leq L\leq 6\}$ erfüllt sind.

**Revendications**

1. Procédé de tests spectraux, sur un générateur congruentiel multiplicatif (d,z,n) ou (d,z) comprenant un entier impair d pour le module et un entier z premier avec d pour le multiplicateur et un entier n premier avec d pour la graine et générant la séquence d'entiers $\{n_k : = nz^{k-1} \bmod(d) | 1 \leq n_k \leq d, k = 1, 2, ...\}$ consécutivement et donnant la séquence de nombres aléatoires de sortie en réalisant l'arithmétique $\{v_k : = n_k/d| 0 \leq v_k \leq 1, k = 1, 2, ...\}$, le procédé étant basé sur l'évaluation de la forme géométrique du treillis $G_L(d,z)$, dans lequel L sorties d'entiers consécutifs du générateur (d,z,n) $\{Q_k : = (nk, n_{k+1}, ..., n_{k+L-1} | k = 1, 2, ...\}$ prennent leurs places, par le calcul de la plus grande distance $\lambda_L(d,z)$ entre des hyperplans de treillis parallèles et voisins de $G_L(d,z)$, **caractérisé par** l'évaluation $\rho_L \cdot(d,z) : = \lambda_L(d,z) / M_L(d)$ du générateur (d, z) sur la base de nouvelles valeurs de référence

$$M_L(d) \; : \; = L^{-1/2}(L+1)^{(L-1)/(2L)}d^{(L-1)/L}, \; L \geq 3,$$

et le fait de juger que (d,z) est passable si les conditions

$$1 < \rho_{L'}(d,z) < R_L, \; 3 \leq L \leq 6,$$

sont remplies pour des niveaux $\{R_L > 1 \mid 3 \leq L \leq 6\}$ prescrits.

**Figure 1A**  Geometry of random number 2-tuples and the valuation $\rho = \rho_2(d, z)$

$\rho = 1.0503 \quad (257, 27)$

$\rho = 1.0983 \quad (283, 83)$

$\rho = 1.1459 \quad (317, 245)$

$\rho = 1.1982 \quad (281, 266)$

$\rho = 1.2491 \quad (277, 20)$

$\rho = 1.3012 \quad (283, 113)$

**Figure 1B** Geometry of random number 2-tuples and the valuation $\rho = \rho_2(d, z)$

$\rho = 1.3501 \quad (311, 297)$

$\rho = 1.3947 \quad (251, 76)$

$\rho = 1.4547 \quad (251, 46)$

$\rho = 1.4959 \quad (281, 117)$

$\rho = 1.9915 \quad (419, 381)$

$\rho = 2.7283 \quad (419, 262)$

**Figure 2** Multiplier $z$ of Fishman and Moore (1986) for the modulus $d = 2^{31} - 1$

| $z = 7429382855$ | 2nd | 3rd | 4th | 5th | 6th |
|---|---|---|---|---|---|
| $a)$ | 0.8673 | 0.8607 | 0.8627 | 0.8320 | 0.8342 |
| $1/a)$ | 1.1530 | 1.1618 | 1.1592 | 1.2019 | 1.1988 |
| $b)$ | 1.15306751 | 1.16186656 | 1.15915450 | 1.20199716 | 1.19882541 |
| $M_L(d)$ | | 1.12942799 | 1.06610522 | 1.06615156 | 1.01146880 |
| | 2nd of $z^2$ | 2nd of $z^3$ | 2nd of $z^4$ | 2nd of $z^5$ | 2nd of $z^6$ |
| $c)$ | 1.91805599 | 1.81316446 | 1.32378868 | 3.25782855 | 1.04479227 |

| $z = 950706376$ | 2nd | 3rd | 4th | 5th | 6th |
|---|---|---|---|---|---|
| $a)$ | 0.8574 | 0.8985 | 0.8692 | 0.8337 | 0.8274 |
| $1/a)$ | 1.1663 | 1.1130 | 1.1505 | 1.1995 | 1.2086 |
| $b)$ | 1.16627569 | 1.11291561 | 1.15054146 | 1.19946130 | 1.20856552 |
| $M_L(d)$ | | 1.08184373 | 1.05818358 | 1.06390229 | 1.01968669 |
| | 2nd of $z^2$ | 2nd of $z^3$ | 2nd of $z^4$ | 2nd of $z^5$ | 2nd of $z^6$ |
| $c)$ | 1.19708825 | 6.76681886 | 1.46420589 | 5.00940631 | 2.26206864 |

| $z = 1226874159$ | 2nd | 3rd | 4th | 5th | 6th |
|---|---|---|---|---|---|
| $a)$ | 0.8411 | 0.8787 | 0.8255 | 0.8378 | 0.8441 |
| $1/a)$ | 1.1889 | 1.1380 | 1.2114 | 1.1936 | 1.1847 |
| $b)$ | 1.18893209 | 1.13803984 | 1.21140770 | 1.19360615 | 1.18426026 |
| $M_L(d)$ | | 1.10626650 | 1.11416388 | 1.05870887 | 0.99917993 |
| | 2nd of $z^2$ | 2nd of $z^3$ | 2nd of $z^4$ | 2nd of $z^5$ | 2nd of $z^6$ |
| $c)$ | 3.51885751 | 2.19846315 | 1.15368543 | 1.47158421 | 1.48916585 |

The shortest dual lattice vector $u_{min} = (29, 19, -5, 10, 14, -3)$ gives the 6-th degree valuation of $z$ by $\lambda_6(d, z) = d/\|u_{min}\| = 0.99917993$.

| $z = 62089911$ | 2nd | 3rd | 4th | 5th | 6th |
|---|---|---|---|---|---|
| $a)$ | 0.8930 | 0.8903 | 0.8575 | 0.8630 | 0.8249 |
| $1/a)$ | 1.1198 | 1.1232 | 1.1662 | 1.1587 | 1.2123 |
| $b)$ | 1.11986188 | 1.12320242 | 1.16615693 | 1.15876257 | 1.21227975 |
| $M_L(d)$ | | 1.09184334 | 1.07254554 | 1.02780319 | 1.02282044 |
| | 2nd of $z^2$ | 2nd of $z^3$ | 2nd of $z^4$ | 2nd of $z^5$ | 2nd of $z^6$ |
| $c)$ | 1.79072973 | 1.44118579 | 1.20332225 | 1.17058675 | 1.63022644 |

| $z = 1343714438$ | 2nd | 3rd | 4th | 5th | 6th |
|---|---|---|---|---|---|
| $a)$ | 0.8237 | 0.8324 | 0.8245 | 0.8262 | 0.8255 |
| $1/a)$ | 1.2140 | 1.2013 | 1.2129 | 1.2104 | 1.2114 |
| $b)$ | 1.21411121 | 1.20130010 | 1.21290241 | 1.21035116 | 1.21145141 |
| $M_L(d)$ | | 1.16776058 | 1.11553861 | 1.07356141 | 1.02212156 |
| | 2nd of $z^2$ | 2nd of $z^3$ | 2nd of $z^4$ | 2nd of $z^5$ | 2nd of $z^6$ |
| $c)$ | 1.99192650 | 1.45479150 | 1.13241226 | 1.56904222 | 1.04455900 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. S. FISHMAN ; L. R. MOORE.** An exhaustive analysis of multiplicative congruential random number generator with modulus 231-1. *SIAM Journal on Scientific and Statistical Computing,* 1986, vol. 7, 24-45

- **N. NAKAZAWA ; H. NAKAZAWA.** Multiplicative congruential generators with moduluses formed by two odd-prime factors for uniform and independent random numbers II. *Structures of spectral tests,* 13 October 2012, http://www10.plala.or.jp/h-nkzw